(19) Europäisches Patentamt
European Patent Office
Office européen des brevets

(11) Veröffentlichungsnummer: **0 336 141 B1**

(12) **EUROPÄISCHE PATENTSCHRIFT**

(45) Veröffentlichungstag der Patentschrift: **16.06.93**

(51) Int. Cl.$^5$: **C08G 77/38**, C08L 83/07, C09D 143/04

(21) Anmeldenummer: **89104420.8**

(22) Anmeldetag: **13.03.89**

# (54) Verfahren zum Beschichten von flächigen Trägern durch Aufbringen von mit (Meth)acrylsäureestergruppen modifizierten härtbaren Organopolysiloxanen.

(30) Priorität: **25.03.88 DE 3810140**

(43) Veröffentlichungstag der Anmeldung:
**11.10.89 Patentblatt 89/41**

(45) Bekanntmachung des Hinweises auf die Patenterteilung:
**16.06.93 Patentblatt 93/24**

(84) Benannte Vertragsstaaten:
**BE DE ES FR GB IT NL**

(56) Entgegenhaltungen:
**EP-A- 0 159 683**
**EP-A- 0 168 713**
**GB-A- 2 041 389**
**GB-A- 2 067 210**

(73) Patentinhaber: **Th. Goldschmidt AG**
**Goldschmidtstrasse 100 Postfach 101461**
**W-4300 Essen 1(DE)**

(72) Erfinder: **Weitemeyer, Christian Dr.**
**Sundernholz 67**
**W-4300 Essen 1(DE)**
Erfinder: **Wewers, Dietmar, Dr.**
**Fernewaldstrasse 194**
**W-4250 Bottrop(DE)**
Erfinder: **Jachmann, Jürgen**
**Berkelstrasse 22 a**
**W-4690 Herne(DE)**

**EP 0 336 141 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Beschichten von flächigen Trägern durch Aufbringen von mit (Meth)acrylsäureestergruppen modifizierten härtbaren Organopolysiloxanen auf die Oberfläche der Träger und Aushärten der modifizierten Organopolysiloxane durch Einwirkung polymerisierender energiereicher Strahlen. Der Begriff (Meth)acrylsäureestergruppeumfasst dabei sowohl Acrylsäureestergruppen als auch (Meth)acrylsäureestergruppen.

Abhäsive Beschichtungsmassen werden in größerem Umfang zur Beschichtung insbesondere von flächigen Materialien verwendet, um die Adhäsionsneigung von adhärierenden Produkten gegenüber diesen Oberflächen zu verringern. Abhäsive Beschichtungsmassen werden beispielsweise zur Beschichtung von Papieren oder Folien verwendet, welche als Träger für selbstklebende Etiketten dienen sollen. Die mit einem Haftkleber versehenen Etiketten haften auf der beschichteten Oberfläche noch in genügendem Maße, um die Handhabung der die Klebeetiketten aufweisenden Trägerfolien zu ermöglichen. Die Etiketten müssen jedoch von der beschichteten Trägerfolie abziehbar sein, ohne daß ihre Klebkraft für die spätere Verwendung wesentlich beeinträchtigt wird. Weitere Anwendungsmöglichkeiten für abhäsive Beschichtungsmassen sind Verpackungspapiere, die insbesondere zur Verpackung von klebrigen Gütern dienen. Derartige abhäsive Papiere oder Folien werden beispielsweise zum Verpacken von Lebensmitteln oder zum Verpacken technischer Produkte, wie z.B. Bitumen, verwendet.

Derartige mit (Meth)acrylsäureestergruppen modifizierte Organopolysiloxane werden auch zum Beschichten von mit elektronischen Bauteilen bestückten Platinen verwendet. Sie dienen dabei insbesondere als Schutz gegen mechanische Einwirkungen und agressive Gase oder Dämpfe.

So ist aus der DE-PS 29 48 708 ein Verfahren zur Herstellung von mit Pentaerythrittriacrylsäure- oder Pentaerythrittrimethacrylsäureestern modifizierten Organopolysiloxanen aus Organochlorpolysiloxanen, gegebenenfalls unter Zusatz von HCl-bindenden Neutralisationsmitteln bekannt, bei dem man Organopolysiloxane der Formel

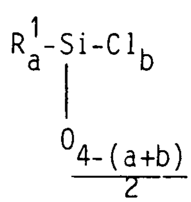

($R^1$ = Alkyl mit 1 bis 4 Kohlenstoffatomen, Vinyl und/oder Phenyl, mit der Maßgabe, daß mindestens 90 Mol-% der Gruppen $R^1$ Methyl sind; a = Wert von 1,8 bis 2,2; b = Wert von 0,004 bis 0,5) zunächst mit, bezogen auf SiCl-Gruppen, mindestens 2molaren Mengen eines Dialkylamins, dessen Alkylgruppen jeweils 3 bis 5 C-Atome aufweisen, und wobei die dem Stickstoff benachbarten C-Atome höchstens jeweils ein Wasserstoffatom tragen, umsetzt und das Umsetzungsprodukt mit mindestens äquimolaren Mengen Pentaerythrittriacrylat oder Pentaerythrittrimethacrylat reagieren läßt und dann das Verfahrensprodukt von in diesem suspendierten festen Bestandteilen in an sich bekannter Weise abtrennt.

Eine nach diesem Verfahren hergestellte Beschichtungsmasse zeigt bereits gute abhäsive Eigenschaften, wobei in Kontakt mit der Beschichtungsmasse stehende Klebebänder ihre Klebkraft gegenüber unbehandelten Substraten weitgehend behalten. Es hat sich jedoch gezeigt, daß die Eigenschaft der Abhäsivität immer im Zusammenhand mit dem chemischen Aufbau und der Struktur des Klebstoffes zu sehen ist, gegenüber dem das Beschichtungsmittel abhäsive Eigenschaften aufweisen soll. Das in der DE-PS 29 48 708 beschriebene abhäsive Beschichtungsmittel konnte deshalb nicht in allen Fällen befriedigende Ergebnisse liefern, da es in seinen Eigenschaften den verschiedenen Klebstoffen nicht angepaßt werden konnte.

Verbesserte Eigenschaften weisen bereits (meth)acrylsäureestermodifizierte Organopolysiloxangemische auf, welche dadurch gekennzeichnet sind, daß sie aus einem äquilibrierten Organopolysiloxan mit im Mittel > 25 bis < 200 Si-Atomen, aus 2 bis 30 Gew.-% Organopolysiloxanen mit im Mittel 2 bis 25 Si-Atomen und aus 2 bis 30 Gew.-% Organopolysiloxanen mit im Mittel 200 bis 2000 Si-Atomen bestehen. Den in diesem ternären Gemisch enthaltenen Organopolysiloxanen kommen dabei unterschiedliche Aufgaben zu. Die niedrigmolekulare Fraktion hat im wesentlichen die Aufgabe der Adhäsion der Beschichtungsmasse auf dem Substrat zu erfüllen. Die hochmolekulare Fraktion dient vorwiegend der Erlangung der gewünschten Abhäsivität der Beschichtungsmasse. Die mittlere Fraktion ist die härtbare Matrix, welche

insbesondere für die physikalischen Eigenschaften der Beschichtungsmasse verantwortlich ist. Es ist dem Fachmann verständlich, daß dies nur eine vereinfachende Beschreibung der Eigenschaften und Aufgaben der drei verschiedenen Fraktionen ist, da die komplexen Eigenschaften, die ein abhäsives Beschichtungsmittel aufweisen muß, nur im Zusammenwirken der drei Komponenten erhalten werden können. Mit dem modifizierten Organopolysiloxangemisch gemäß EP-A-0 168 713 (DE-PS 34 26 087) ist es möglich geworden, einerseits die abhäsiven Eigenschaften des Gemisches gegenüber klebenden Oberflächen und andererseits die adhäsiven Eigenschaften gegenüber dem Substrat, auf welchem das Beschichtungsmittel aufgebracht und auf dem es ausgehärtet wird, zu verbessern. Jedoch zeigt sich auch bei diesen Beschichtungsmassen, daß sie in ihren Eigenschaften den verschiedenen Klebstoffen noch nicht genügend angepaßt werden können.

In der EP-A-0 159 683 werden elektronenstrahlhärtbare, flüssige Beschichtungsmittel beschrieben. Diese sollen enthalten:

1. 60 bis 95 Teile eines Organopolysiloxans mit mehr als etwa 25 Siloxangruppen pro Molekül und 2 bis 10 Teile umgesetzter Carbinolgruppen pro Molekül, wobei die restlichen am Silicium befindlichen Substituenten Kohlenwasserstoffgruppen mit 1 bis 20 Kohlenstoffatomen sind; dabei werden unter dem Begriff der umgesetzten Carbinolgruppen Ester der Acrylsäure, Methacrylsäure oder Gemische oder Ether eines Hydroxyalkylesters dieser Säuren, wobei die Alkylgruppe 2 bis 4 Kohlenstoffatome enthält, verstanden; nichtumgesetzte Carbinolgruppen sollen im wesentlichen nicht mehr vorhanden sein, so daß die Hydroxylzahl $< 10$ ist;
2. 3 bis 25 Teile eines Polyesters eines mehrwertigen Alkohols mit Acrylsäure, Methacrylsäure oder Gemischen hiervon, wobei der mehrwertige Alkohol 2 bis 4 Hydroxylgruppen pro Molekül und ein Molekulargewicht von $< 1200$ aufweisen soll;
3. 1 bis 10 Teile Acrylsäure, Methacrylsäure oder Mischungen dieser Säuren.

Die zusätzliche Verwendung des (Meth)acrylsäureesters eines Polyalkohols erhöht zwar die Geschwindigkeit der Aushärtung, wirkt sich aber nachteilig auf die Flexibilität und Abhäsivität des Beschichtungsmittels infolge Erhöhung des organischen Anteils aus. Ein zusätzlicher Nachteil besteht im Gehalt an freier Acrylsäure oder Methacrylsäure. Dieser Gehalt führt zu einer Geruchsbelästigung und erschwert die Verarbeitung beim Auftragen auf das zu beschichtende Material.

Organopolysiloxane mit Acrylsäureestergruppen sind aufgrund ihrer Strahlenhärtbarkeit für eine Reihe weiterer Anwendungsmöglichkeiten beschrieben. Mit Acrylsäureestergruppen modifizierte Organopolysiloxane werden als Überzugslacke zum Ein- und Umgießen elektrischer und elektronischer Bauteile sowie zur Herstellung geformter Gegenstände verwendet. Zu dem möglichen strukturellen Aufbau derartiger acrylsäureestergruppenmodifizierter Polysiloxane werden die folgenden Offenlegungs-, Auslege- und Patentschriften gennant:

Die DE-AS 23 35 118 betrifft gegebenenfalls substituierte Acrylatgruppen enthaltende Organopolysiloxane der allgemeinen Formel

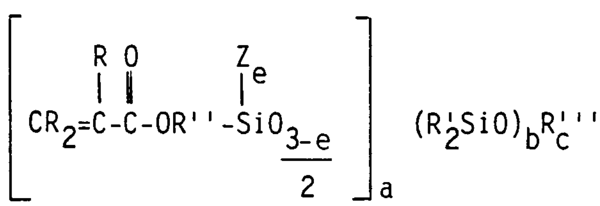

(R = Wasserstoff oder einwertige Kohlenwasserstoffreste mit 1 bis 12 C-Atomen; R′ = einwertige, gegebenenfalls halogenierte Kohlenwasserstoffreste oder Cyanalkylreste mit 1 bis 8 C-Atomen; R″ = zweiwertige Kohlenwasserstoffreste mit 1 bis 18 C-Atomen oder C-O-C-Bindungen enthaltende zweiwertige Kohlenwasserstoffreste; $R'''$ = $R''''O_{0,5}$ oder $R'_3$ $SiO_{0,5}$; Z = OR'''', R'''' oder $OSiR'_3$ ; R'''' = Alkylrest mit 1 bis 12 C-Atomen;a und b jeweils Zahlen von 1 bis 20 000; c = Zahl von 0 bis 3; e = Zahl von 0 bis 2; mindestens einer der Reste Z = OR'''', wenn c = 0). Die Siloxanpolymeren können als Zwischenprodukte bei der Herstellung von Copolymeren eingesetzt werden, die Organopolysiloxansegmente enthalten und die als Beschichtungsmassen Verwendung finden. Außerdem können diese acrylatfunktionellen Siloxanpolymeren als Schlichtemittel und als Schutzüberzugsmassen für Papier und Gewebe dienen. Diese Produkte sind jedoch zur Herstellung abhäsiver Beschichtungsmittel ungeeignet. Die linearen diacrylatmodifizierten Polysiloxane gemäß DE-AS 23 35 118 weisen zudem definitionsgemäß Alkoxygruppen auf, die hydrolytisch abgespalten werden können und zur weiteren Vernetzung der Polysiloxane unter Verschlechterung der für

eine Beschichtungsmasse wichtigen elastischen Eigenschaften führen.

Aus der DE-A-30 44 237 sind Polysiloxane mit seitenständigen Acrylsäureestergruppen bekannt, welche durch Umsetzung von epoxyfunktionellen Siloxane bestimmter Struktur mit Acrylsäure hergestellt werden können. Die erhaltenen Produkte sind strahlungshärtbar. Sie können als niedrigviskose Lacke zur Aufbringung über übliche Drucktinten auf Ölbasis verwendet werden. Die Produkte sind als abhäsive Beschichtungsmassen nur mit erheblichen Einschränkungen brauchbar, da jeder Acrylsäureestergruppe eine Hydroxylgruppe gegenübersteht.

In der US-A-4 568 566 sind härtbare Siliconzubereitungen beschrieben. Diese bestehen aus

a) 75 bis 100 Mol-% chemisch gebundenen Siloxyeinheiten der Formel $R_3SiO_{0,5}$, $RSiO_{1,5}$ und $SiO_2$ sowie

b) 0 bis 25 Mol-% $R_2SiO$-Einheiten, wobei eine Anzahl der Einheiten R die Formel

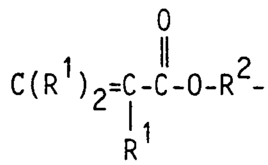

aufweisen, wobei $R^1$ ein Wasserstoff- oder ein Kohlenwasserstoffrest mit 1 bis 12 Kohlenstoffatomen und $R^2$ ein zweiwertiger Kohlenwasserstoffrest oder ein Oxyalkylenrest ist. Diese härtbaren Zubereitungen werden insbesondere zum Überziehen elektronischer Bauteile und als Beschichtungsmaterial für Lichtleitfasern verwendet. Aufgrund des zu geringen Gehaltes an $R_2SiO$-Einheiten sind sie als abhäsive Beschichtungsmittel für flächige Träger nicht geeignet.

Gegenstand der EP-A-0 152 179 ist eine zu einem Elastomer härtbare Siliconzubereitung. Diese besteht aus a) einem Siliconharz mit linearem Aufbau und im Mittel wenigstens 150 Siloxaneinheiten sowie endständig gebundenen Acrylsäuregruppen, wobei die dazwischen befindliche Region frei von Acrylsäuregruppen sein soll, b) wenigstens 10 % feinteiliger Kieselsäure und c) einem Photoinitiator. Diese Materialien sollen als Klebmittel und als Vergußmassen verwendet werden.

Schließlich ist auf die EP-A-0 169 592 zu verweisen. Diese EP-A- betrifft eine optische Glasfaser mit einer Kunststoffbedeckung, mit einer Glasfaser und einer umhüllenden Schicht aus einem Kunstgummi mit einer Brechzahl, die höher als die der äußeren Schicht der Glasfaser ist, wobei das Kunstgummi aus einer härtbaren Kunststoffzusammensetzung gebildet ist, die ein Copolymer aufweist, das als monomere Einheiten Dimethylsiloxan und mindestens ein Siloxan aus der Gruppe enthält, die durch Methyl-phenylsiloxan und Diphenylsiloxan gebildet ist, wobei das Siloxancopolymer mindestens zwei Acrylatestergruppen je Molekül aufweist, mit dem Kennzeichen, daß die härtbare Kunststoffzusammensetzung außerdem ein Polyurethanacrylat mit einem mittleren Molekulargewicht über 3000 aufweist. Das im Patentanspruch genannte Polysiloxan kann dabei folgende Formel haben

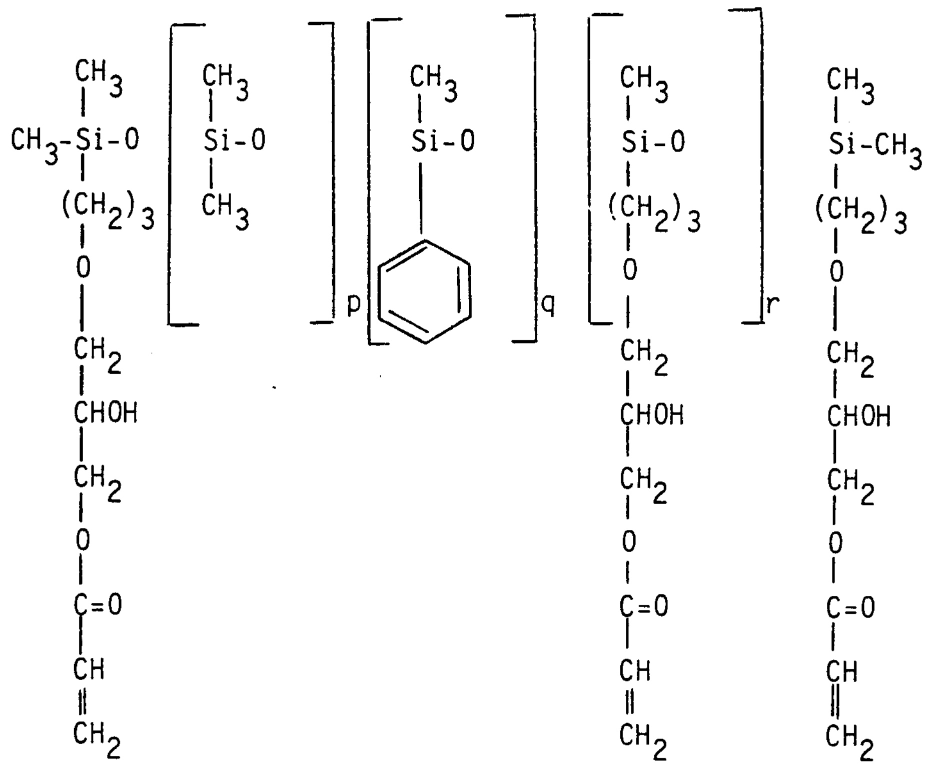

Wesentliche Bedingung ist, daß diese Polysiloxane an Silicium gebundene Phenylgruppen aufweisen. Der Gehalt an Phenylgruppen ist notwendig, um den Brechungsindex der Beschichtungsmasse an den des Glases der Lichtleitfaser anzugleichen. Von der Verwendung dieser Siloxane in Kombination mit einem Polyurethanacrylat zur Beschichtung optischer Glasfasern kann nicht auf die mögliche Verwendbarkeit derartiger Verbindungen als abhäsive Beschichtungsmassen geschlossen werden.

In der Zeitschrift "Makromolekular Chemie" (Rapid Communication), 7, (1986), 703 bis 707, wird die Synthese linearer Methylpolysiloxane mit endständigen Methacrylsäureestergruppen beschrieben. Dabei wird zunächst an α,ω-Wasserstoffdimethylpolysiloxan Allylepoxypropylether in Gegenwart von Chloroplatinsäure addiert. Das entstandene Diepoxyd wird anschließend mit Methacrylsäure in Gegenwart von Chromdiisopropylsalicylat zu den gewünschten Methacrylsäureestern umgesetzt. Diese Ester können in zwei isomeren Formen vorliegen:

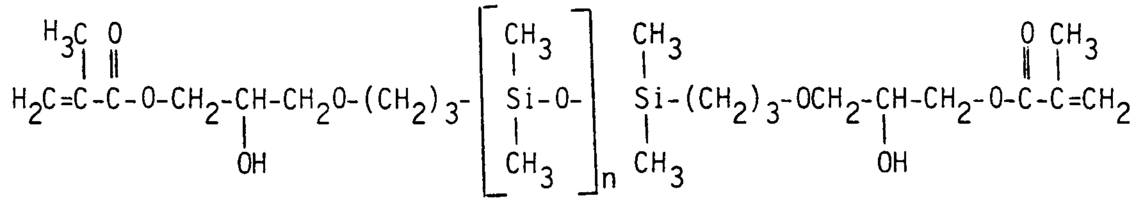

( α -isomer)

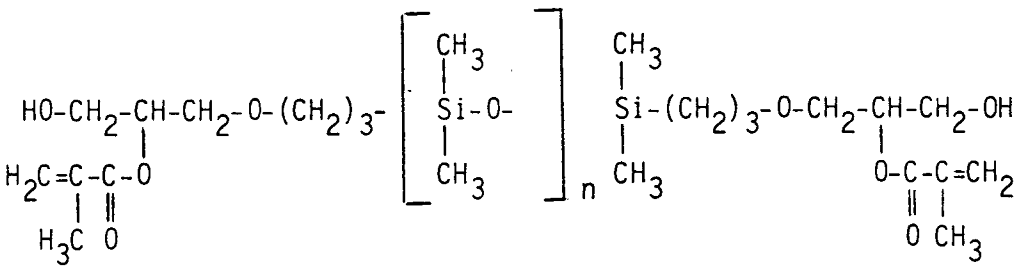

( β -isomer)

Soweit nach den Verfahren des Standes der Technik von epoxyfunktionellen Siloxanen ausgehend (Meth)acrylsäureester hergestellt werden, erfolgt die Umsetzung der Epoxygruppen mit (Meth)acrylsäure. Dabei entstehen durch Öffnung des Epoxydringes (Meth)acrylsäuremonoester mit einer vicinalen Hydroxylgruppe.

Der Erfindung liegt die Aufgabe zugrunde, abhäsive Beschichtungsmassen auf der Grundlage (meth)-acrylsäureestermodifizierter Organopolysiloxane aufzufinden, die gegenüber den aus dem Stand der Technik bekannten Beschichtungsmassen verbesserte Eigenschaften aufweisen.

Der Erfindung liegt insbesondere die Aufgabe zugrunde, Beschichtungsmassen aufzufinden, welche unterschiedlichen adhärierenden Produkten (Klebstoffen) angepaßt werden können.

Die gesuchten mit (Meth)acrylsäureestergruppen modifizierten Organopolysiloxane sollen dabei insbesondere folgende Eigenschaftskombination aufweisen:

1. befriedigende Haftung auf dem jeweils zu beschichtenden Träger
2. hohe Aushärtungsgeschwindigkeit auf dem Träger
3. chemische und physikalische Beständigkeit der ausgehärteten Beschichtung
4. hohe Flexibilität der ausgehärteten Beschichtung
5. abhäsive Eigenschaften gegenüber klebenden Produkten, Anpaßbarkeit der abhäsiven Beschichtung an den chemischen Charakter des Klebstoffes
6. Einstellbarkeit des gewünschten Grades der Abhäsivität.

Die modifizierten Organopolysiloxane sollen außerdem zur Beschichtung bestückter elektronischer Platinen und ähnlicher elektronischer Bauteile geeignet sein.

Das erfindungsgemäße Verfahren ist dadurch gekennzeichnet, daß man als härtbare Organopolysiloxane solche verwendet, die erhältlich sind durch Umsetzung von Polysiloxanen der allgemeinen durchschnittlichen Formel

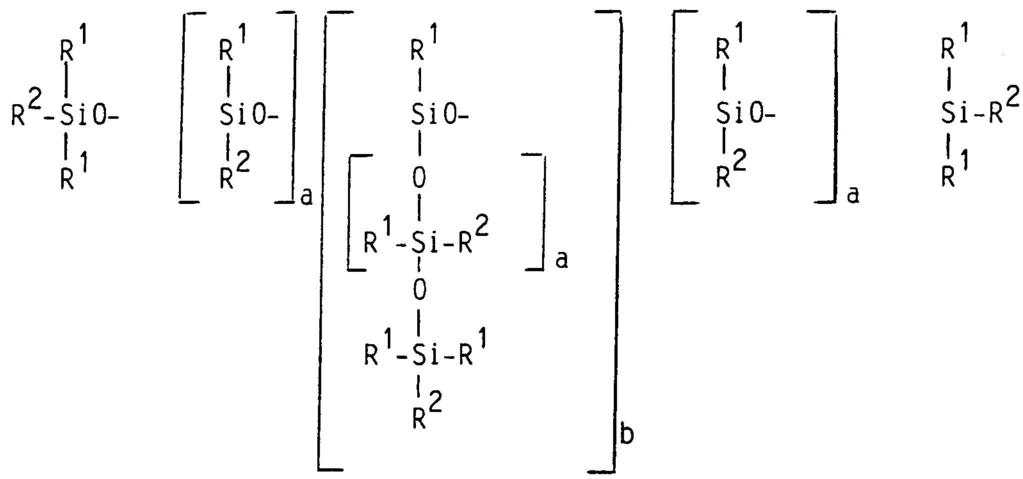

I

wobei

die Reste $R^1$ gleich oder verschieden sind und jeweils niedere Alkylreste mit 1 bis 4 Kohlenstoffatomen oder Phenylreste bedeuten,

die Reste $R^2$ zu einem Teil die Bedeutung der Reste $R^1$ haben können und die übrigen Reste $R^2$ zu 70 bis 100 % hydroxyfunktionelle Reste der Formel
$-CH_2(CR^3{}_2)_n-(OCH_2CHR^4)_m-OH$, $-CH=CH-CR^3{}_2-OH$ und/oder Reste der Formel

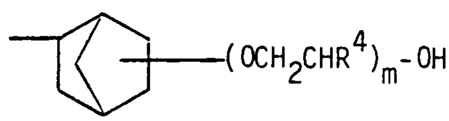

sind,
wobei die Reste
$R^3$ gleich oder verschieden sind und jeweils einen H- oder Alkylrest mit 1 bis 4 Kohlenstoffatomen bedeuten,
$R^4$ gleich oder verschieden sind und jeweils einen H- oder Alkylrest mit 1 bis 10 Kohlenstoffatomen bedeuten,
und die Indices
$n = 0$ bis 10 und
$m = 0$ bis 40 sind und

30 bis 0 % gegebenenfalls mit halogen- oder Phenylresten substituierte Alkylreste mit 2 bis 20 Kohlenstoffatomen und/oder Wasserstoffresten sind,
mit der Maßgabe, daß im mittleren Molekül mindestens 1,8 hydroxyfunktionelle $R^2$-Reste enthalten sind,

a einen Wert von 1 bis 1000 und
b einen Wert von 0 bis 10 hat,
mit, bezogen auf Hydroxylgruppen, 0,4 bis 0,9 molaren Mengen (Meth)acrylsäure und bis zu 0,6 molaren Mengen einer Monocarbonsäure mit 2 bis 10 kohlenstoffatomen, welche frei von zur Polymerisation befähigten Doppelbindungen ist, wobei die Summe der molaren Mengen der Säuren 1,0 nicht überschreiten darf, unter üblichen Veresterungsbedingungen.

Die allgemeine Formel I ist die durchschnittliche (mittlere) Formel der für die Umsetzung benötigten Hydroxyfunktionellen Organopolysiloxane. Die einzelnen Baueinheiten befinden sich innerhalb des Polymerengemisches in statistischer Verteilung.

Die Summe der funktionellen $[R^1,R^2SiO-]$-Einheiten beträgt 2a + b . a. Die Anzahl der trifunktionellen $[R^1SiO_{3/2}-]$-Einheiten wird durch den Index b angegeben. a hat einen Wert von 1 bis 1000, vorzugsweise einen Wert von 5 bis 200. b hat einen Wert von 0 bis 10, vorzugsweise von 0 bis 2. Ist $b = 0$, liegen die hydroxyfunktionellen Organopolysiloxane mit kettenförmiger, linearer Struktur vor. Die durch die Indices a und b definierte Struktur der hydroxyfunktionellen Organopolysiloxane bleibt auch nach der Umsetzung mit der (Meth)acrylsäure und der anderen Monocarbonsäure erhalten.

$R^1$ kann innerhalb des polymeren Moleküls gleich oder verschieden sein und die Bedeutung eines niederen Alkylrestes mit 1 bis 4 Kohlenstoffatomen oder eines Phenylrestes haben. Die Alkylreste können geradkettig oder verzweigt vorliegen. Vorzugsweise sind mindestens 90 % der Reste $R^1$ Methylreste.

Die Reste $R^2$ können zu einem Teil die Bedeutung der Reste $R^1$ haben. Die übrigen Reste $R^2$ sind zu 70 bis 100 % hydroxyfunktionelle Reste der Formel $-CH_2(CR^3_2)_n-(OCH_2CHR^4)_m-OH$ und/oder der Formel

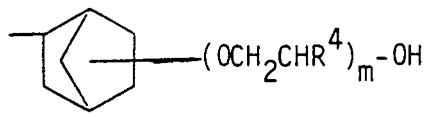

und zu 30 bis 0 % gegebenenfalls substituierte Alkylreste mit 2 bis 20 Kohlenstoffatomen und/oder Wasserstoffreste.

In diesen Resten ist $R^3$ jeweils gleich oder verschieden und bedeutet einen Wasserstoff- oder einen Alkylrest mit 1 bis 4 Kohlenstoffatomen, wobei der Alkylrest vorzugsweise ein Methylrest ist.

$R^4$ ist jeweils gleich oder verschieden und bedeutet einen Wasserstoff-oder Alkylrest mit 1 bis 10 Kohlenstoffatomen, wobei geradkettige Alkylreste bevorzugt sind.

n hat einen Wert von 0 bis 10, wobei jedoch aus Gründen der Zugänglichkeit ein Wert von 2 bis 10 bevorzugt ist.

m hat einen Wert von 0 bis 40, jedoch ist m vorzugsweise gleich Null.

Setzt man die Bedeutung der Reste $R^3$ und $R^4$ bzw. die Werte der Indices in die Gruppe $-CH_2(CR^3_2)_n-(OCH_2CHR^4)_m-OH$

bzw.

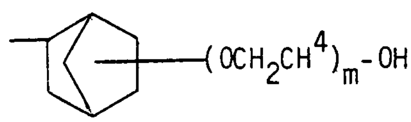

ein, ergibt sich, daß der Teil $-CH_2(CR^3_2)_n-$ bzw. der Norbornylrest die Bedeutung eines Brückengliedes hat, über welches die hydroxyfunktionelle Gruppe mit einem Siliciumatom des Siloxangerüstes verbunden ist. Vorzugsweise hat der Brückenanteil $-CH_2(CR^3_2)_n-$ die Bedeutung $-(CH_2)_3-$ oder

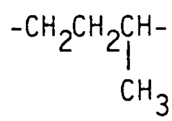

oder $-(CH_2)_{11}-$.

Der Anteil des Restes $R^2$ zwischen dem Brückenglied und der endständigen OH-Gruppen mit der Formel $-(OCH_2CHR^4)_m$ hat die Bedeutung eines Ether- oder Polyetherrestes. Dieser Rest kann entfallen (m = 0).

Vorzugsweise ist $R^4$ ein Wasserstoffrest oder ein Methylrest. $R^4$ kann jedoch auch die Bedeutung eines langkettigen Alkylrestes mit bis zu 10 Kohlenstoffatomen haben. Der Alkylrest ist vorzugsweise unverzweigt.

Bevorzugte hydroxyfunktionelle Rest $R^2$ sind $-CH_2OH$, $-(CH_2)_3OH$, $-(CH_2)_4OH$, $-(CH_2)_{11}OH$, $-CH_2CH(CH_3)CH_2OH$, $-CH_2CH(CH_3)CH_2CH_2OH$, $-CH_2CH_2C(CH_3)_2OH$, $-CH_2CH_2C(CH_3)HOH$ und $-CH=CH-CH_2OH$.

Bis zu 30 % der Reste $R^2$ können Alkylreste mit 2 bis 20 Kohlenstoffatomen oder Wasserstoffreste sein. Die Alkylreste können gegebenenfalls mit Halogen- oder Phenylresten substituiert sein. Beispiele geeigneter und bevorzugter Alkylreste $R^2$ sind Ethyl-, Propyl-, n-Butyl-, i-Butyl-, Hexyl-, Octyl-, Dodecyl-, Octadecyl-, 2-Phenylpropyl-, 3-Chlorpropylreste.

Bei der Auswahl der verschiedenen Bedeutungen für den Rest $R^2$ ist die Bedingung zu beachten, daß im mittleren (durchschnittlichen) Molekül mindestens 1,8 Reste $R^2$ hydroxyfunktionelle Rest sind. Dabei ist der Wert 1,8 als mathematischer Durchschnittswert eines Polymerengemisches zu verstehen.

Die beim erfindungsgemäßen Verfahren zu verwendenden Organopolysiloxane sind nun dadurch erhältlich, daß man die hydroxyfunktionellen Organopolysiloxane der allgemeinen Formel I mit (Meth)-

acrylsäure und gegebenenfalls zusätzlich einer weiteren Monocarbonsäure, welche frei von zur Polymerisation befähigten Doppelbindungen ist, umsetzt. (Meth)acrylsäure soll dabei bedeuten, daß Acrylsäure oder Methacrylsäure oder ein Gemisch beider Säuren eingesetzt werden kann.

Erfindungswesentlich ist dabei die Maßgabe, daß, bezogen auf Hydroxylgruppen, 0,4- bis 0,9molare Mengen (Meth)acrylsäure und bis zu 0,6molare Mengen der weiteren Monocarbonsäure, welche frei von zur Polymerisation befähigten Doppelbindungen ist, umgesetzt worden sind. Die gesamte molare Menge der Säuren darf jedoch, bezogen auf Hydroxylgruppen, 1,0 nicht überschreiten.

Bevorzugt zu verwenden sind solche erfindungsgemäße Polysiloxane, bei denen alle Hydroxylgruppen des Polysiloxans verestert sind.

Als Monocarbonsäuren, welche frei von zur Polymerisation befähigten Doppelbindungen sind, kommen Alkylcarbonsäuren und Benzoesäuren in Frage. Als Alkylcarbonsäuren sind solche mit 2 bis 11 Kohlenstoffatomen bevorzugt. Beispiele solcher Monocarbonsäuren sind Essigsäure, Propionsäure, Buttersäure, Valeriansäure, Pivalinsäure, 2,2-Dimethylbuttersäure, 2,2-Dimethylvaleriansäure, Acetessigsäure, Isooctancarbonsäure, Isodecacarbonsäure, Sorbinsäure und Undecylensäure.

Eine besonders bevorzugte Monocarbonsäure ist die Essigsäure.

Bei den beim erfindungsgemäßen Verfahren zu verwendenden Organopolysiloxanen liegen 40 bis 90 Mol-% der hydroxyfunktionellen Reste $R^2$ in Form ihrer (Meth)acrylsäureester vor. Bis zu 60 Mol-% der hydroxyfunktionellen Reste $R^2$ können in Form der Monocarbonsäureester frei von zur Polymerisation befähigten Doppelbindungen vorliegen. Je nach Anteil der zur Veresterung eingesetzten Monocarbonsäure, können außerdem die hydroxyfunktionellen Reste $R^2$ unverändert vorliegen. Das Verhältnis der von den Resten $R^2$ abgeleiteten Gruppen mit (Meth)acrylsäureestergruppen und Monocarbonsäureestergruppen und der unveränderten hydroxyfunktionellen Reste $R^2$ ergibt sich durch die Art und Menge des zur Veresterung verwendeten (Meth)acrylsäure/Monocarbonsäuregemisches.

Hierdurch hat es der Fachmann in der Hand, die Eigenschaften der erfindungsgemäß zu verwendenden Organopolysiloxane in der gewünschten Weise einzustellen:

1. Die Abhäsivität der erfindungsgemäß zu verwendenden Organopolysiloxane steigt nach ihrer Aushärtung mit der Anzahl der (Meth)acrylsäureestergruppen im Polymerenmolekül. Mit der höheren Vernetzungsdichte steigt die Glastemperatur der ausgehärteten Beschichtung, die Flexibilität der Beschichtung nimmt ab. Gleichzeitig erhöht sich die chemische und physikalische Beständigkeit der ausgehärteten Beschichtung.

2. Mit steigendem Anteil an Monocarbonsäureestergruppen, welche frei von zur Polymerisation befähigten Doppelbindungen sind, verringert sich die Abhäsivität und verbessert sich die Haftung am Träger. Diese Verringerung der Abhäsivität wird zusätzlich durch gegebenenfalls noch vorhandene Hydroxylgruppen nicht umgesetzter, hydroxyfunktioneller Gruppen $R^2$ verstärkt. Hierdurch kann auch die abhäsive Beschichtung an den chemischen Charakter des Klebstoffes angepaßt werden.

Die beim erfindungsgemäßen Verfahren zu verwendenden Organopolysiloxane sind deshalb in besonderer Weise geeignet, auf den jeweiligen anwendungstechnischen Verwendungszweck eingestellt und angepaßt zu werden. Sie eignen sich deshalb in besonderer Weise als strahlenhärtbare abhäsive Beschichtungsmittel oder zur Beschichtung elektrischer oder elektronischer Bauteile.

Im folgenden sind Beispiele erfindungsgemäß zu verwendender Polysiloxane mit über SiC-Gruppen gebundenen (Meth)acrylsäureestergruppen und gegebenenfalls Monocarbonsäureestergruppen wiedergegeben.

Verbindung 1

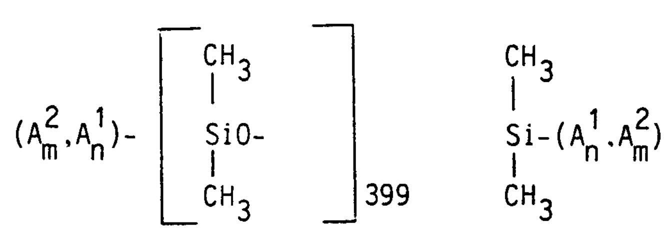

m = 0,8,
n = 0,2,

$A^1$ = 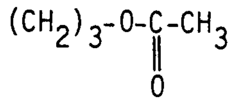

$A^2$ = 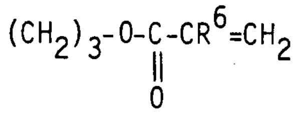

$R^6 = CH_3, H$

Verbindung 2

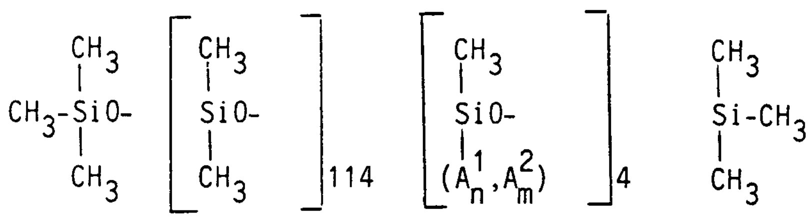

$A^1$, $A^2$, n und m wie in Verbindung 1 definiert.

Verbindung 3

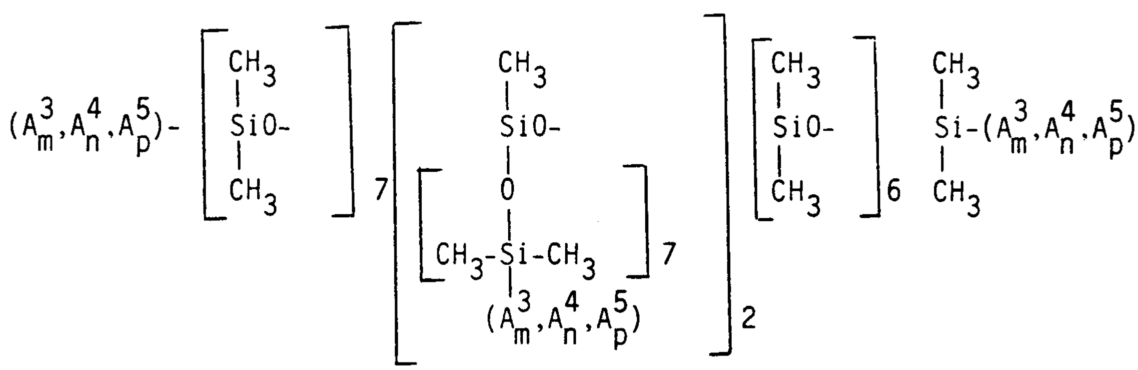

m = 0,8,
n = 0,1,
p = 0,1,

$A^3$ = 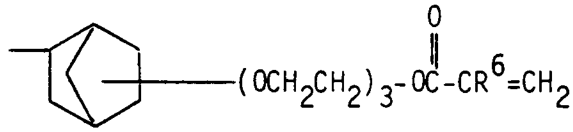

$A^4$ =

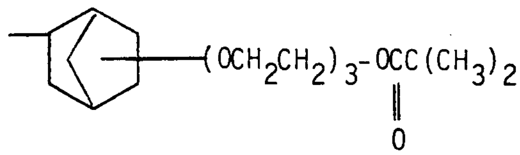

$A^5$ =

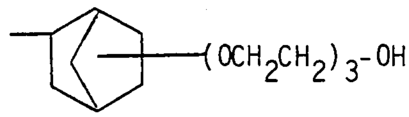

Verbindung 4

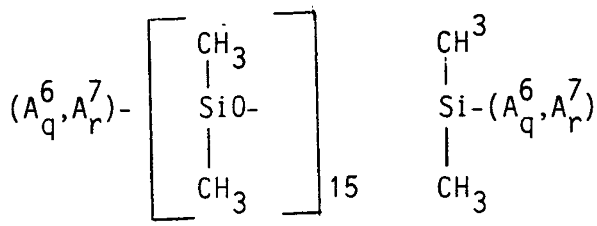

q = 0,9,
r = 0,1,

$A^6$ =

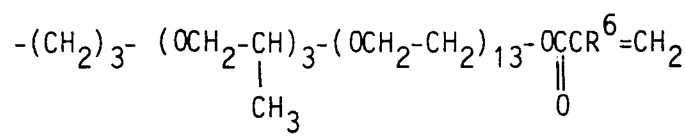

$A^7$ =

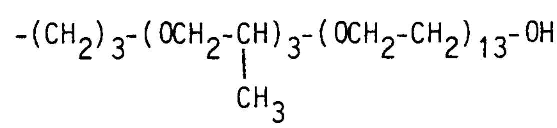

$R^6$ = H, $CH_3$

Verbindung 5

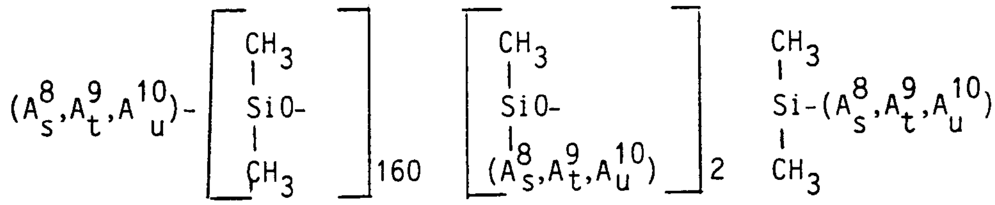

s = 0,7,
t = 0,1,
u = 0,2,

$$A^8 = -(CH_2)_4O\underset{\underset{O}{\|}}{C}CR^6=CH_2$$

$R^6$ = H, $CH_3$

$$A^9 = -(CH_2)_4-O\underset{\underset{O}{\|}}{C}-(CH_2)_9CH_3$$

$A^{10}$ = $-(CH_2)_5-CH_3$

Die Herstellung der erfindungsgemäß eingesetzten Organopolysiloxane erfolgt in aus dem Stand der Technik bekannter Weise. So kann man beispielsweise zur Herstellung der hydroxyfunktionellen Organopolysiloxane der Formel I Wasserstoffpolysiloxane einsetzen, bei denen $R^1$ die Bedeutung eines Wasserstoffrestes hat. An diese Wasserstoffsiloxane werden Reste $R^{2*}$ angelagert, wobei die Reste $R^{2*}$ den Resten $R^2$ entsprechen, jedoch an dem zur Verknüpfung mit dem Si-Atom bestimmten Ende eine olefinische Doppelbindung aufweist. Bei dieser Umsetzung können SiH-Gruppen nicht umgesetzt im Produkt verbleiben, so daß die erfindungsgemäßen Polysiloxane geringe Mengen Wasserstoffreste als $R^2$-Gruppen enthalten können.

Die Hydroxylgruppen der hydroxyfunktionellen Polysiloxane der Formel I werden mit der (Meth)-acrylsäure und der weiteren Monocarbonsäure in an sich bekannter Weise verestert. Darunter ist zu verstehen, daß die Veresterung vorzugsweise bei Temperaturen von 80 bis 150 °C, gegebenenfalls in Gegenwart eines Lösungsmittels, durchgeführt wird. Das Lösungsmittel sollte dabei zweckmäßig mit dem bei der Veresterung freigesetzten Wasser ein Azeotrop bilden. Es empfiehlt sich, dem Reaktionsgemisch Veresterungskatalysatoren, wie z.B. Schwefelsäure, Sulfonsäure oder Metallsalze, zuzusetzen.

Gegebenenfalls kann man bei der Veresterung zur Vermeidung einer vorzeitigen Polymerisation an sich bekannter Polymerisationsinhibitoren, wie z.B. Hydrochinon, in wirksamen Mengen zusetzen.

Beim erfindungsgemäßen Verfahren können die modifizierten Organopolysiloxane als solche direkt verwendet werden. Es ist lediglich im Falle der UV-Härtung notwendig, den modifizierten Polysiloxanen einen Radikalstarter zuzusetzen. Die Zugabe erfolgt z.B. in Mengen von 2 bis 5 Gew.-%, bezogen auf Siloxan.

Die Wahl des Radikalstarters sollte sich am Wellenlängenspektrum der zur Aushärtung verwendeten Strahlenquelle orientieren. Derartige Radikalstarter sind bekannt. Beispiele solcher Radiakalstarter sind Benzophenon, dessen Oxime oder Benzoinether.

Es ist möglich, die so erhaltenen Beschichtungsmassen in an sich bekannter Weise noch durch Zusatz weiterer Produkte zu modifizieren.

Derartige bekannte Modifizierungsmittel sind Siloxane mit Gruppen, welche bei der Aushärtung der Beschichtungsmasse in diese chemisch eingebaut werden. Besonders geeignete Modifizierungsmittel sind Siloxane mit an Si-Atome gebundenen Wasserstoffatomen. Diese können u.a. eine Erniedrigung der Viskosität der Beschichtungsmasse bewirken, wodurch ihre Auftragbarkeit auf flächige Träger verbessert wird.

Es ist ferner möglich, den Beschichtungsmitteln Zusatzmittel zuzugeben, die als inerte Substanzen von der Beschichtungsmasse bei der Erhärtung umschlossen werden. Beispiele solcher in der Beschichtungsmasse verteilten Substanzen sind hochdisperse Kieselsäure oder Polymerisate aus Fluorkohlenwasserstoffen.

In den folgenden Beispielen werden die Herstellung der beim erfindungsgemäßen Verfahren zu verwendenden modifizierten Polysiloxane sowie deren anwendungstechnische Eigenschaften beschrieben.

## Beispiel 1

Zu 116 g (2 Mol) Allylalkohol, 200 g Toluol und 40 ml einer Lösung von 4 mg $H_2PtCl_6 \cdot 6\,H_2O$ in 3 ml Glykoldimethylether in einem 4-l-Dreihalskolben werden bei 100 °C 1170 g (1 Mol) eines SiH-Gruppen enthaltenden Polydimethylsiloxans der durchschnittlichen Formel

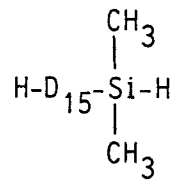

D = 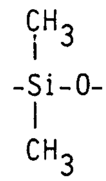

zugetropft. Nach 8 h bei 100 °C werden zu dem so erhaltenen hydroxyfunktionellen Polydimethylsiloxan der durchschnittlichen Formel

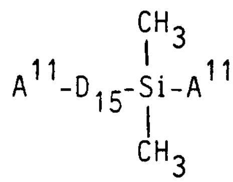

$A^{11}$ = $-(CH_2)_3-OH$
bei 30°C 116g (1,6 Mol) Acrylsäure, 24 g (0,4 Mol) Essigsäure, 0,3 g Methylhydrochinon, 2,5 g 98 %ige Schwefelsäure und 200 g Toluol gegeben. Anschließend wird das Reaktionsgemisch zum Sieden erhitzt und das entstehende Reaktionswasser ausgekreist. Nach 15 h ist die theoretische Wassermenge von 36 g ausgekreist. Die überschüssige Säure wird mit $NaHCO_3$ neutralisiert. Nach Destillation (100°C, 40 mbar) und Filtration werden 1320 g (95 % der Theorie) eines mittelviskosen Öls erhalten, das nach dem $^1$H-NMR-Spektrum die allgemeine Formel

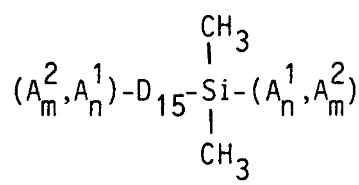

$A^1$ und $A^2$ wie in Verbindung 1 definiert ($R^6$ = H),
m = 0,8,
n = 0,2,
aufweist.

Beispiel 2

Analog zu Beispiel 1 wird aus 11,6 g (0,2 Mol) Allylalkohol und 441,9 g (0,05 Mol) eines SiH-Gruppen enthaltenden Polydimethylsiloxans der durchschnittlichen Formel

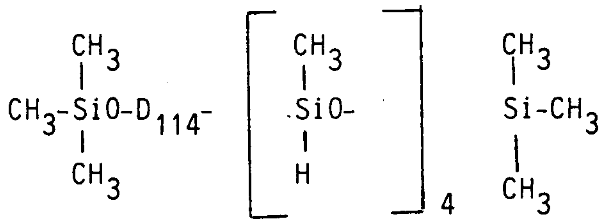

ein hydroxyfunktionelles Polydimethylsiloxan der durchschnittlichen Formel

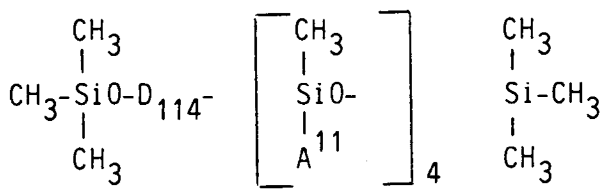

$A^{11}$ = $-(CH_2)_3-OH$
hergestellt.

Anschließend wird das enthaltende Polydimethylsiloxan mit 11,6 g (0,16 Mol) Acrylsäure und 2,4 g (40 mMol) Essigsäure verestert. Nach 30 h wird neutralisiert, filtriert und destilliert. Man erhält 431 g (93 % der Theorie) eines mittelviskosen Öls der durchschnittlichen Formel

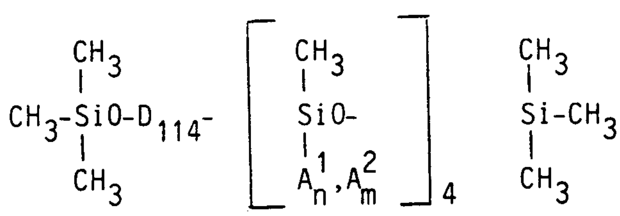

$A^1$, $A^2$ wie in Verbindung 1 definiert ($R^6$ = H),
n = 0,8,
m = 0,2,

Beispiel 3

Analog zu Beispiel 1 werden zu einem Gemisch aus 96,8 g (0,4 Mol) eines ethoxylierten Norbornenols der durchschnittlichen Formel

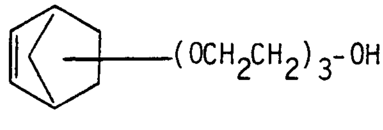

100 g Toluol und 8 ml Katalysatorlösung 200 g (0,1 Mol) eines SiH-Gruppen enthaltenden Polydimethylsiloxans der durchschnittlichen Formel

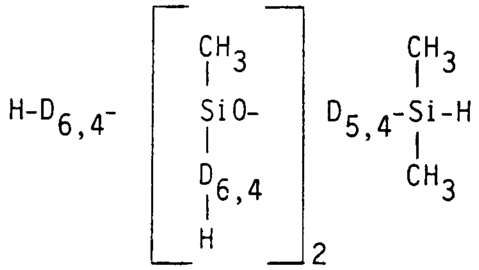

zugetropft. Nach 7 h bei 100 °C wird auf Raumtemperatur abgekühlt und zum Reaktionsgemisch 100 g Toluol, 2,9 g (40 mMol) Propionsäure, 23,1 g (320 mMol) Acrylsäure und 0,8 g 98 %ige Schwefelsäure gegeben. Anschließend wird zum Sieden erhitzt und das entstehende Reaktionswasser ausgekreist. Nach 24 h und analoger Aufarbeitung werden 310 g (98 %) eines Öls erhalten, das die durchschnittliche Formel

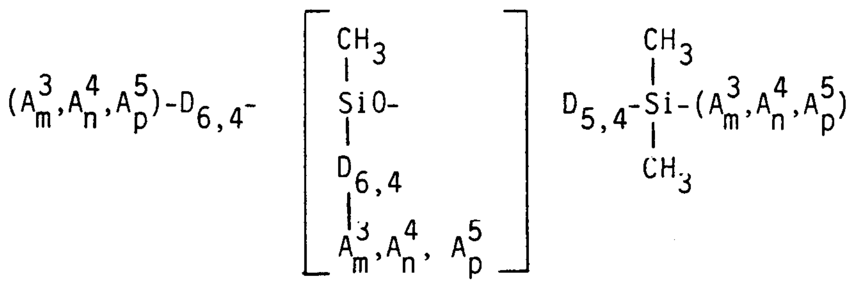

$A^3$, $A^4$, $A^5$ wie in Verbindung 3 definiert ($R^6$ = H),
m = 0,8,
n = 0,1,
p = 0,1,

Beispiel 4

Analog zum Beispiel 1 werden aus 1447 g (1,8 Mol) eines Polyethers der allgemeinen Formel

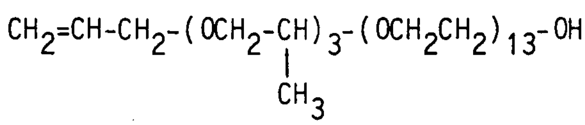

23,6 g (0,2 Mol) α-Methylstyrol und 1170 g (1 Mol) eines SiH-Gruppen enthaltenden Polydimethylsiloxans der durchschnittlichen Formel

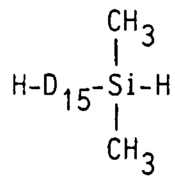

ein hydroxyfunktionelles Polydimethylsiloxan der durchschnittlichen Formel

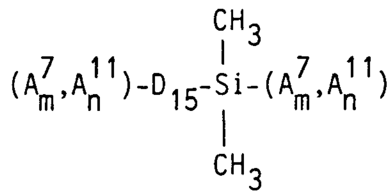

$A^7$ wie in Verbindung 4 definiert

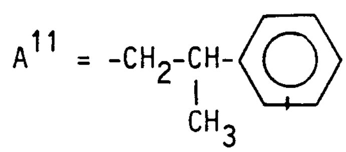

m = 0,9,
n = 0,1,
hergestellt. Wird das Produkt analog zu Beispiel 1 mit 116 g (1,6 Mol) Acrylsäure verestert, erhält man nach 30 h und analoger Aufarbeitung 2591 g (95 % der Theorie) eines rotbraunen Öls, das nach dem $^1$H-NMR-Spektrum die durchschnittliche Formel

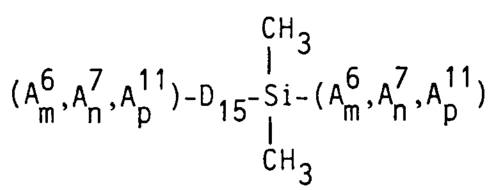

$A^6$, $A^7$ wie in Verbindung 4 definiert ($R^6$ = H)

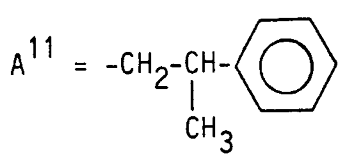

m = 0,8,
n = 0,1,
p = 0,1,

Beispiel 5

Analog zu Beispiel 1 wird aus 14,0 g (0,24 Mol) Allylalkohol, 5,0 g (0,06 Mol) 1-Hexen und 440,5 g (0,05 Mol) eines SiH-Gruppen enthaltenden Polydimethylsiloxans der durchschnittlichen Formel

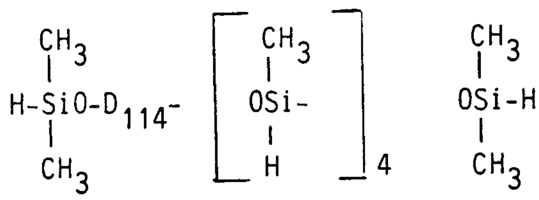

ein hydroxyfunktionelles Polydimethylsiloxan der durchschnittlichen Formel

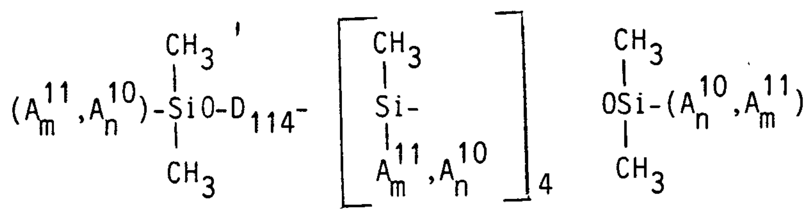

$A^{10}$ = $-(CH_2)_5-CH_3$ ,
$A^{11}$ = $-(CH_2)_3-OH$ ,
m = 0,2,
n = 0,8,
hergestellt.

Anschließend wird das enthaltende Polydimethylsiloxan mit 13,0 g (0,18 Mol) Acrylsäure und 11,0 g (0,06 Mol) Undecylensäure verestert. Nach 34 h wird neutralisiert, filtriert und destilliert. Man erhält 465 g (98 % der Theorie) eines mittelviskosen Öls, das nach dem $^{1}$H-NMR-Spektrum die durchschnittliche Formel

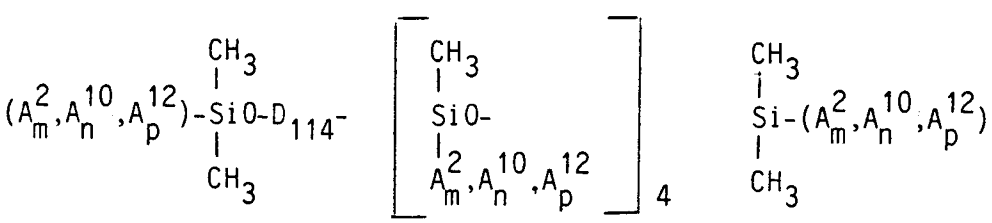

$A^2$ wie in Verbindung 1 definiert ($R^6$ = H),
$A^{10}$ wie in Verbindung 5 definiert,

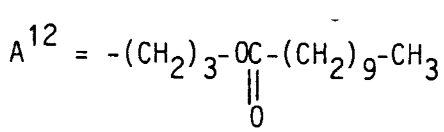

m = 0,7,
n = 0,2,
p = 0,1,
aufweist.

Anwendungstechnische Prüfungen

Zur Überprüfung der anwendungstechnischen Eigenschaften der erfindungsgemäß zu verwendenden Polysiloxane werden die Produkte der Beispiele1 bis 5 auf unterschiedliche flächige Träger (orientierte Polypropylenfolie, satiniertes Papier) aufgetragen und durch Einwirkung von 1,5 Mrad Elektronenstrahlen gehärtet. Die Auftragsmenge beträgt in jedem Falle ca. 1,1 g/m².

Für die Vergleichsversuche werden verschiedene, 30 mm breite Klebebänder verwendet, und zwar zwei mit Acrylatklebern beschichtete Klebebänder, die im Handel unter der Bezeichnung Tesa® 154 und Tesa® 970 erhältlich sind, sowie ein mit Kautschukkleber beschichtetes Klebeband, welches im Handel unter der Bezeichnung Tesa® 969 erhältlich ist.

Zur Messung der Abhäsivität werden diese Klebebänder auf den Untergrund aufgewalzt und anschließend im Falle der Acrylatklebebänder bei 70 ° C und im Falle des Kautschukklebebandes bei 40 ° C gelagert. Nach 24 Stunden wird die Kraft gemessen, die benötigt wird, um das jeweilige Klebeband unter einem Schälwinkel von 180 ° C vom Untergrund abzuziehen. Diese Kraft wird als Trennkraft bezeichnet. Außerdem erfolgt eine Prüfung der Adhäsion der modifizierten Polysiloxane auf dem Substrat durch kräftiges Reiben mit dem Daumen. Bei mangelnder Haftung bilden sich gummiartige Krümmel (sogenannter "rub-off"-Test).

Tabelle

| mod. Siloxan Beispiel | satiniertes Papier | | | | orientierte Polypropylfolie | | | |
|---|---|---|---|---|---|---|---|---|
| | Tesa® 154 | Tesa® 970 | Tesa® 969 | Rub off Test | Tesa® 154 | Tesa® 970 | Tesa® 969 | Rub off Test |
| | Trennkraft [ N ] | | | | Trennkraft [ N ] | | | |
| 1 | 1,0 | 2,0 | 1,8 | nein | 0,9 | 1,8 | 1,6 | nein |
| 2 | 0,15 | 0,4 | 0,3 | nein | 0,1 | 0,3 | 0,3 | nein |
| 3 | 3 | 6 | 8 | nein | 3 | 4 | 7 | nein |
| 4 | 4 | 6 | 6 | nein | 2 | 5 | 5 | nein |
| 5 | 0,1 | 0,4 | 0,3 | nein | 0,05 | 0,2 | 0,2 | nein |

Aus der Tabelle ergibt sich, daß die erfindungsgemäß zu verwendenden Organopolysiloxane die gewünschten anwendungstechnischen Eigenschaften aufweisen: sie haften auf dem jeweils zu beschichtenden Träger, lassen sich auf diesem schnell aushärten und zeigen gute abhäsive Eigenschaften gegenüber chemisch verschiedenartig aufgebauten Klebern.

**Patentansprüche**

**1.** Verfahren zum Beschichten von flächigen Trägern durch Aufbringen von mit (Meth)-acrylsäureestergruppen modifizierte härtbare Organopolysiloxanen auf die Oberfläche der Träger und Aushärten der modifizierten Organopolysiloxane durch Einwirkung polymerisierender energiereicher Strahlen, dadurch gekennzeichnet, daß man als härtbare Organopolysiloxane solche verwendet, die erhältlich sind durch Umsetzung von Polysiloxanen der allgemeinen durchschnittlichen Formel

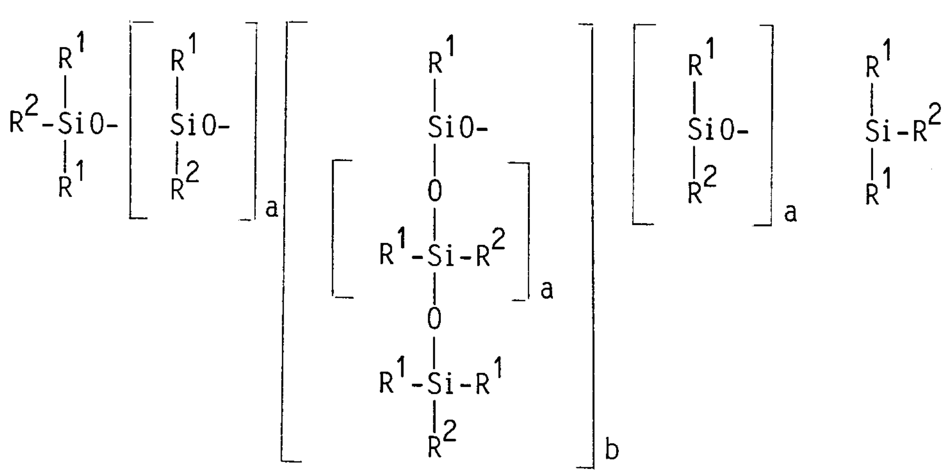

I

wobei

die Reste $R^1$ gleich oder verschieden sind und jeweils niedere Alkylreste mit 1 bis 4 Kohlenstoffatomen oder Phenylreste bedeuten,

die Reste $R^2$ zu einem Teil die Bedeutung der Reste $R^1$ haben können und die übrigen Reste $R^2$ zu 70 bis 100 % hydroxyfunktionelle Reste der Formel $-CH_2(CR^3_2)_n-(OCH_2CHR^4)_m-OH$ , $-CH=CH-CR^3_2-OH$ und/oder Reste der Formel

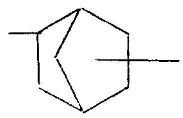 $-(OCH_2CHR^4)_m-OH$ sind,

wobei die Reste
$R^3$ gleich oder verschieden sind und jeweils einen H- oder Alkylrest mit 1 bis 4 Kohlenstoffatomen bedeuten,
$R^4$ gleich oder verschieden sind und jeweils einen H- oder Alkylrest mit 1 bis 10 Kohlenstoffatomen bedeuten,
und die Indices
n = 0 bis 10 und
m = 0 bis 40 sind und

30 bis 0 % gegebenenfalls mit Halogen- oder Phenylresten substituierte Alkylreste mit 2 bis 20 Kohlenstoffatomen und/oder Wasserstoffresten sind,
mit der Maßgabe, daß im mittleren Molekül mindestens 1,8 hydroxyfunktionelle $R^2$-Reste enthalten sind,

a einen Wert von 1 bis 1000 und
b einen Wert von 0 bis 10 hat,
mit, bezogen auf Hydroxylgruppen, 0,4- bis 0,9molaren Mengen (Meth)acrylsäure und bis zu 0,6molaren Mengen einer Monocarbonsäure mit 2 bis 10 Kohlenstoffatomen, welche frei von zur Polymerisation befähigten Doppelbindungen ist, wobei die Summe der molaren Mengen der Säuren 1,0 nicht überschreiten darf, unter üblichen Veresterungsbedingungen.

**2.** Verfahren nach Anspruch 1, dadurch gekennzeichnet, daß man als härtbare Organopolysiloxane solche verwendet, die erhältlich sind durch Umsetzung von Polysiloxanen der Formel I mit einem Gemisch aus (Meth)acrylsäure und von Doppelbindungen freier Monocarbonsäure mit 2 bis 10 Kohlenstoffatomen in solchen Mengenverhältnissen, daß alle Hydroxylgruppen des Polysiloxans der allgemeinen Formel I verestert sind.

**3.** Verfahren nach Anspruch 1, dadurch gekennzeichnet, daß man als härtbare Organopolysiloxane solche verwendet, die erhältlich sind durch Umsetzung von Polysiloxanen der Formel I mit einem Gemisch aus (Meth)acrylsäure und Essigsäure.

**4.** Verfahren nach einem oder mehreren der vorhergehenden Ansprüche, dadurch gekennzeichnet, daß man als härtbare Organopolysiloxane solche verwendet, die erhältlich sind durch Umsetzung von Polysiloxanen der Formel I, bei denen a einen Wert von 5 bis 200 und b einen Wert von 0 bis 2 hat.

**5.** Verfahren nach einem oder mehreren der vorhergehenden Ansprüche, dadurch gekennzeichnet, daß man als härtbare Organopolysiloxane solche verwendet, die erhältlich sind durch Umsetzung von Polysiloxanen der Formel I, bei denen b einen Wert von 0 hat.

**6.** Verfahren nach einem oder mehreren der vorhergehenden Ansprüche, dadurch gekennzeichnet, daß man als härtbare Organopolysiloxane solche verwendet, die erhältlich sind durch Umsetzung von Polysiloxanen der Formel I, bei denen mindestens 90 % der Reste $R^1$ Methylreste sind.

**7.** Verfahren nach einem oder mehreren der vorhergehenden Ansprüche, dadurch gekennzeichnet, daß man als härtbare Organopolysiloxane solche verwendet, die erhältlich sind durch Umsetzung von

Polysiloxanen der Formel I, bei denen m = 0 ist.

**8.** Verfahren nach einem oder mehreren der vorhergehenden Ansprüche, dadurch gekennzeichnet, daß man als härtbare Organopolysiloxane solche verwendet, die erhältlich sind durch Umsetzung von Polysiloxanen der Formel I, bei denen der hydroxyfunktionelle Rest $R^2$ aus der Gruppe $-CH_2OH$, $-(CH_2)_3OH$, $-CH_2-CH(CH_3)CH_2OH$, $-(CH_2)_4OH$, $-CH_2CH(CH_3)CH_2CH_2OH$, $-CH_2CH_2C(CH_3)_2OH$ und $-CH_2CH_2C(CH_3)HOH$ ausgegewählt ist.

**9.** Verfahren nach einem oder mehreren der vorhergehenden Ansprüche, dadurch gekennzeichnet, daß man als härtbare Organopolysiloxane solche verwendet, die erhältlich sind durch Umsetzung von Polysiloxanen der Formel I, bei denen der Rest $R^2$, wenn er die Bedeutung eines gegebenenfalls substituierten Alkylrestes mit 2 bis 20 Kohlenstoffatomen hat, aus der Gruppe der Ethyl-, Propyl-, i-Butyl-, Hexyl-, Octyl-, Dodecyl-, Octadecyl-, 2-Phenylpropyl- und 3-Chlorpropyl-Reste ausgewählt ist.

## Claims

**1.** Process for coating sheet-like supports by applying curable organopolysiloxanes modified by (meth)-acrylic acid ester groups to the surface of the supports and curing the modified organopolysiloxanes by the action of polymerising energy-rich radiation, characterised in that the curable organopolysiloxanes used are those which are obtainable by reaction of polysiloxanes of the general average formula

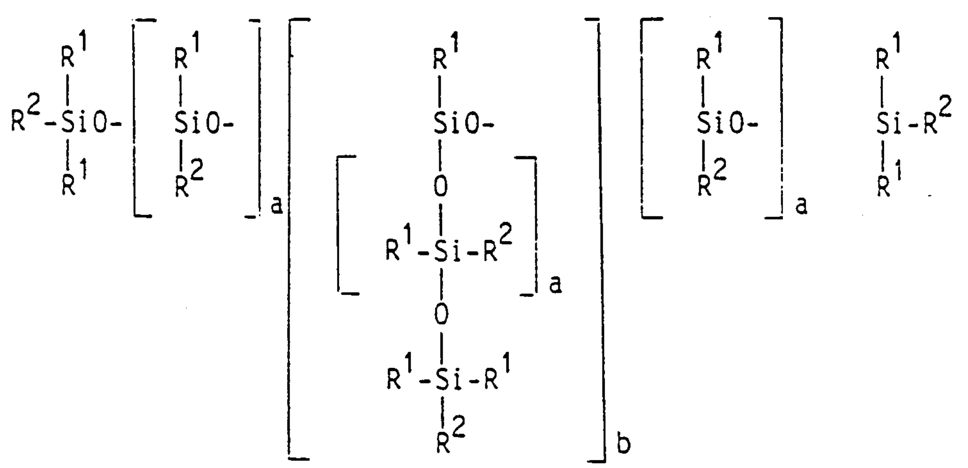

I

in which

| | |
|---|---|
| the radicals $R^1$ | are identical or different and each denote lower alkyl radicals having 1 to 4 carbon atoms or phenyl radicals, |
| some of the radicals $R^2$ | have the meaning of the radicals $R^1$ and the other radicals $R^2$, to the extent of 70 to 100 %, are hydroxy-functional radicals of the formula $-CH_2(CR^3_2)_n-(OCH_2CHR^4)_m-OH$, $-CH=CH-CR^3_2-OH$ and/or radicals of the formula |

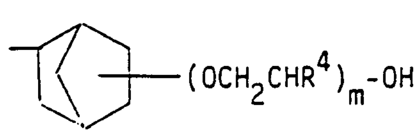

the radicals $R^3$ being identical or different and each denoting a H radical or alkyl radical having 1 to 4 carbon atoms,

the radicals $R^4$ being identical or different and each denoting a H radical or alkyl radical having 1 to 10 carbon atoms,

and the indices being
n = 0 to 10 and
m = 0 to 40, and,
to the extent of 30 to 0 %, are alkyl radicals, having 2 to 20 carbon atoms, which are optionally substituted by halogen or phenyl radicals and/or are hydrogen radicals,
with the proviso that the average molecule contains at least 1.8 hydroxy-functional $R^2$ radicals,

a has a value of from 1 to 1000 and
b has a value of from 0 to 10,
with, relative to hydroxyl groups, 0.4 to 0.9 molar amounts of (meth)acrylic acid and up to 0.6 molar amounts of a monocarboxylic acid having 2 to 10 carbon atoms, which is free from double bonds capable of polymerisation, on condition that the sum of the molar amounts of the acids must not exceed 1.0, under conventional esterification conditions.

**2.** Process according to Claim 1, characterised in that the curable organopolysiloxanes used are those which are obtainable by reaction of polysiloxanes of the formula I with a mixture of (meth)acrylic acid and monocarboxylic acid which has 2 to 10 carbon atoms and is free from double bonds, in proportions such that all hydroxyl groups of the polysiloxane of the general formula I are esterified.

**3.** Process according to Claim 1, characterised in that the curable organopolysiloxanes used are those which are obtainable by reaction of polysiloxanes of the formula I with a mixture of (meth)acrylic acid and acetic acid.

**4.** Process according to one or more of the preceding claims, characterised in that the curable organopolysiloxanes used are those which are obtainable by reaction of polysiloxanes of the formula I in which a has a value of from 5 to 200 and b has a value of from 0 to 2.

**5.** Process according to one or more of the preceding claims, characterised in that the curable organopolysiloxanes used are those which are obtainable by reaction of polysiloxanes of the formula I in which b has a value of 0.

**6.** Process according to one or more of the preceding claims, characterised in that the curable organopolysiloxanes used are those which are obtainable by reaction of polysiloxanes of the formula I in which at least 90 % of the radicals $R^1$ are methyl radicals.

**7.** Process according to one or more of the preceding claims, characterised in that the curable organopolysiloxanes used are those which are obtainable by reaction of polysiloxanes of the formula I in which m is 0.

**8.** Process according to one or more of the preceding claims, characterised in that the curable organopolysiloxanes used are those which are obtainable by reaction of polysiloxanes of the formula I in which the hydroxy-functional radical $R^2$ has been selected from the group comprising $-CH_2OH$, $-(CH_2)_3OH$, $-CH_2-CH(CH_3)CH_2OH$, $-(CH_2)_4OH$, $-CH_2CH(CH_3)CH_2CH_2OH$, $-CH_2CH_2C(CH_3)_2OH$ and $-CH_2CH_2C(CH_3)HOH$.

**9.** Process according to one or more of the preceding claims, characterised in that the curable organopolysiloxanes used are those which are obtainable by reaction of polysiloxanes of the formula I in which the radical $R^2$, if it denotes an optionally substituted alkyl radical having 2 to 20 carbon atoms, has been selected from the group comprising ethyl, propyl, i-butyl, hexyl, octyl, dodecyl, octadecyl, 2-phenylpropyl and 3-chloropropyl radicals.

## Revendications

**1.** Procédé de revêtement de supports plats par application d'organopolysiloxanes durcissables modifiés par des groupes d'esters de l'acide (méth)acrylique, sur la surface des supports, et durcissement des organopolysiloxanes modifiés, sous l'action de rayons de polymérisation à forte énergie, caractérisé en ce qu'on utilise, comme organopolysiloxanes durcissables, ceux qu'on obtient par réaction de polysiloxanes répondant à la formule générale moyenne :

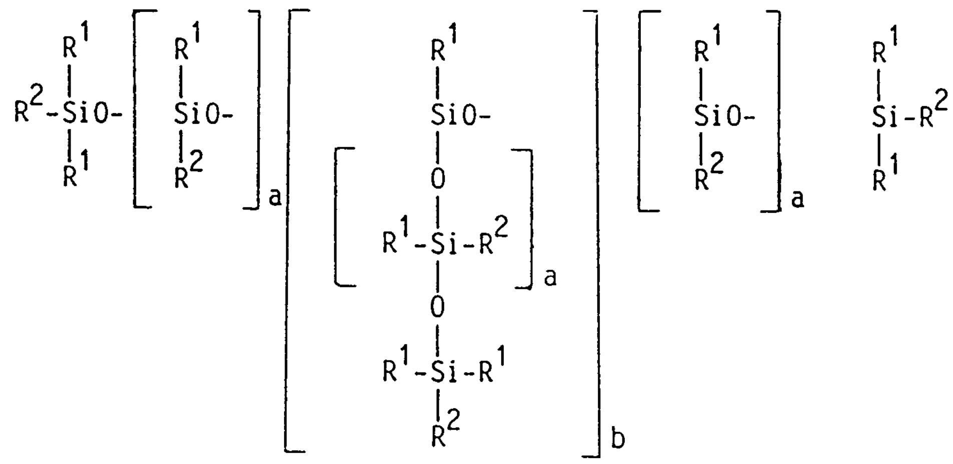

I

dans laquelle

les restes $R^1$ sont identiques ou différents et signifient à chaque fois des restes alkyles inférieurs comportant de 1 à 4 atomes de carbone ou des restes phényles,

les restes $R^2$ peuvent avoir, pour certains d'entre eux, la signification des restes $R^1$, et pour les autres restes $R^2$ :

70 à 30 % sont des restes à fonctionnalité hydroxy, répondant à la formule :

$-CH_2(CR^3_2)_n-(OCH_2CHR^4)_m-OH$ ou $-CH=CH-CR^3_2-OH$, et/ou des restes répondant à la formule :

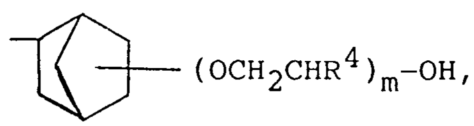

où les restes

$R^3$ sont identiques ou différents et signifient à chaque fois un reste d'hydrogène ou un reste alkyle comportant de 1 à 4 atomes de carbone,

$R^4$ sont identiques ou différents et signifient à chaque fois un reste d'hydrogène ou un reste alkyle comportant de 1 à 10 atomes de carbone ; et

l'indice n = 0 à 10,

l'indice m = 0 à 40 ; et

30 à 0 % sont des restes alkyles éventuellement substitués par des restes halogène ou phényle, comportant de 2 à 20 atomes de carbone et/ou atomes d'hydrogène,

à la condition que la molécule moyenne contienne au moins 1,8 reste $R^2$ à fonctionnalité hydroxy,

a vaut de 1 à 1 000, et

b vaut de 0 à 10,

avec, par rapport aux groupes hydroxyles, des quantités de 0,4 à 0,9 mole d'acide (méth)acrylique et jusqu'à 0,6 mole d'un acide monocarboxylique comportant de 2 à 10 atomes de carbone, qui ne contient pas de doubles liaisons aptes à la polymérisation, la somme des quantités molaires des acides ne devant pas dépasser 1,0, dans les conditions usuelles d'estérification.

**2.** Procédé selon la revendication 1, caractérisé en ce qu'on utilise, comme organopolysiloxanes durcissables, ceux qu'on obtient par réaction de polysiloxanes de formule I avec un mélange d'acide (méth)-acrylique et d'un acide monocarboxylique exempt de doubles liaisons et comportant de 2 à 10 atomes de carbone, selon des rapports quantitatifs tels que tous les groupes hydroxyles du polysiloxane de

formule générale I sont estérifiés.

3. Procédé selon la revendication 1, caractérisé en ce qu'on utilise, comme organopolysiloxanes durcissables, ceux qu'on obtient par réaction de polysiloxanes de formule I avec un mélange d'acide (méth)-acrylique et d'acide acétique.

4. Procédé selon une ou plusieurs des revendications précédentes, caractérisé en ce qu'on utilise, comme organopolysiloxanes durcissables, ceux qu'on obtient par réaction de polysiloxanes de formule I, dans lesquels a vaut de 5 à 200 et b vaut de 0 à 2.

5. Procédé selon une ou plusieurs des revendications précédentes, caractérisé en ce qu'on utilise, comme organopolysiloxanes durcissables, ceux qu'on obtient par réaction de polysiloxanes de formule I, dans lesquels b vaut 0.

6. Procédé selon une ou plusieurs des revendications précédentes, caractérisé en ce qu'on utilise, comme organopolysiloxanes durcissables, ceux qu'on obtient par réaction de polysiloxanes de formule I, dans lesquels au moins 90 % des restes $R^1$ sont des restes méthyle.

7. Procédé selon une ou plusieurs des revendications précédentes, caractérisé en ce qu'on utilise, comme organopolysiloxanes durcissables, ceux qu'on obtient par réaction de polysiloxanes de formule I, dans lesquels m = 0.

8. Procédé selon une ou plusieurs des revendications précédentes, caractérisé en ce qu'on utilise, comme organopolysiloxanes durcissables, ceux qu'on obtient par réaction de polysiloxanes de formule I, dans lesquels le reste $R^2$ à fonctionnalité hydroxy est choisi dans le groupe formé de $-CH_2OH$, $-(CH_2)_3OH$, $-CH_2-CH(CH_3)CH_2OH$, $-(CH_2)_4OH$, $-CH_2CH(CH_3)CH_2CH_2OH$, $-CH_2CH_2C(CH_3)_2OH$ et $-CH_2CH_2C(CH_3)HOH$.

9. Procédé selon une ou plusieurs des revendications précédentes, caractérise en ce qu'on utilise, comme organopolysiloxanes durcissables, ceux qu'on obtient par réaction de polysiloxanes de formule I, dans lesquels le reste $R^2$, quand il a la signification d'un reste alkyle éventuellement substitué et comportant de 2 à 20 atomes de carbone, est choisi dans le groupe formé des restes éthyle, propyle, i-butyle, hexyle, octyle, dodécyle, octadécyle, 2-phénylpropyle et 3-chloropropyle.